# EUROPEAN PATENT SPECIFICATION

(11) **EP 1 006 739 B1**
(45) Date of publication and mention of the grant of the patent: **28.08.2013**
(21) Application number: 98122775.4
(22) Date of filing: 01.12.1998
(51) Int. Cl.: H04W 28/24, H04L 12/28, H04L 29/08

(54) **Processing of data packages between a mobile and a fixed network with quality of service profiles**
Verarbeitung von Datenpaketen zwischen ein Mobilfunkendgerät und ein Festnetz mit Dienstqualitätprofilen
Traitement de paquets de données entre un portable et un réseau fixe avec des profiles de qualité de service

(43) Date of publication of application: 07.06.2000
(73) Proprietor: Gemalto M2M GmbH, 81541 München (DE)
(72) Inventor: Havmoller, Leo, 9400 Norresundby (DK); Rysgaard, Bent, 9220 Aalborg (DK)
(74) Representative: Eisenführ, Speiser & Partner

(56) References cited:
- EP-A- 0 782 364
- WO-A-97/36405
- US-A- 5 638 412

## Description

Prior art documents US-A-5638412 and EP-A-0782364 disclose a mobile station and a system capable to exchange data via an air interface. The invention relates to a mobile station or a communication system according to the generic class of the independent patent claims. The GSM-System has the possibility to exchange data packages between the mobile station and the base station (GPRS: general package data radio system). For the processing of the data packages the system contains a quality of service profile (QoS profile) that determines how the data packages are handeled compare to other dated packages.

### Advantage of the invention

The mobile station and the communication system according to the features of the independent patent claims have the advantage that the Quality of Service profile (QOS profile) can be adapted according to the needs of the users. This adaptation of the quality of service profile is performed automatically without asking the user to supply further information.

Useful improvements of the invention derive from the features of the dependent patent claims. The analysis is a simple translation from one format to another format, if the data itself contain information about how the data should be handled like in TCP/IP headers. Further a quality of service profile can easily be extracted from the type of data. A further possibility is to analyse stream of data packages over the time.

### Drawings

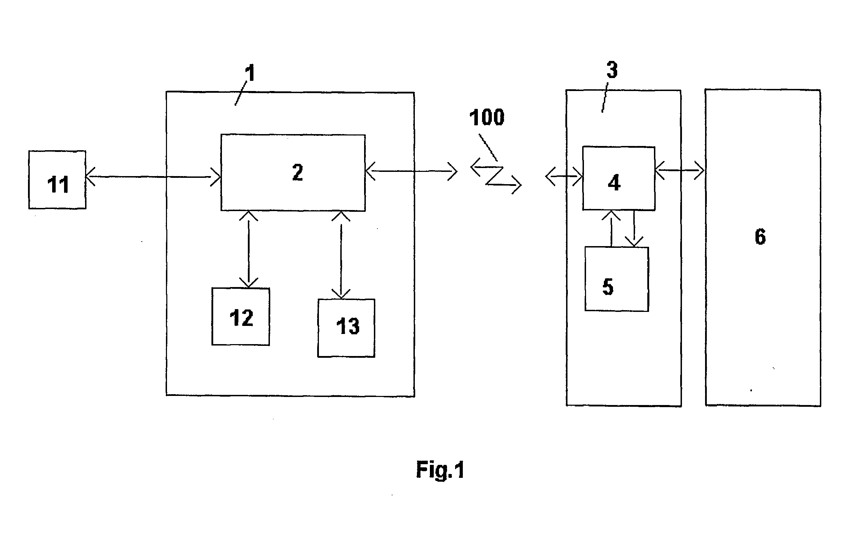

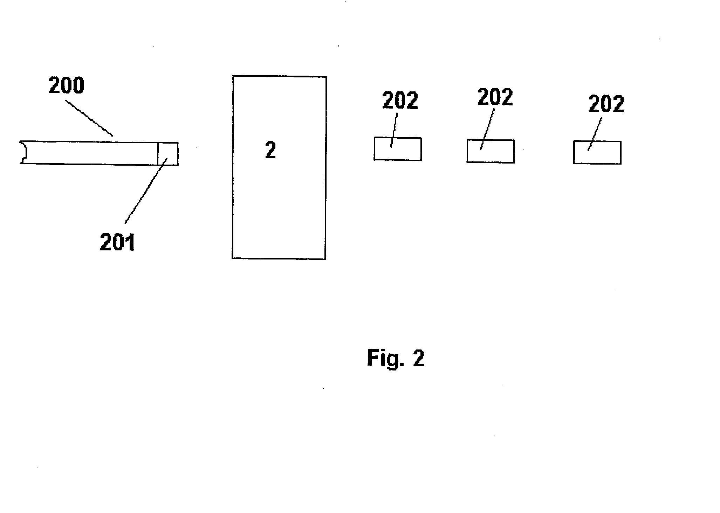

The invention is shown in the drawings and described in detail in the description. Figure 1 shows a communication network comprising a mobile station, a base station and telephone network and figure 2 shows the data processing of a processing unit.

### Description

Figure 1 shows a communication system comprising a mobile station 1 and a base station 3. The mobile station 1 and the base station 3 are capable to exchange data over a wireless " air interface" 100. The mobile station comprises a processing unit 2 capable to process data from or for different data station 11, 12, 13 and exchanging the data via the air interface 100 with the base station 3. The processing unit 2 is also capable to receive data from the base station 3 and supplies those data to the data stations 11, 12, 13. The base station 3 also comprises a processing unit 4, that processes the data exchanged over the air interface 100 and sent or receive those data to or from the connected network 6 capable of handling packet switched data communication in some manor. The base station further contains a memory 5 capable to exchange information with the processing unit 4. These memory 5 is used for storing control information that is related to the processing of data by the processing unit 4.

The invention is related to the exchange of data between the mobile station 1 and the base station 3 in the form of data packages, in the GSM/UMTS system called general packet radio service, GPRS. In this mode of operation lager blocks of information are subdivided in smaller packages and the information are then sent over the air interface 100 in small data packages. An example of this type of exchange of data is found for instance in the GSM-System where it is called general packet data radio system GPRS. The advantage for the system is that data packages are much more easy to handle than a continues stream of data. The transport network has a possibility to smooth situations where high traffic occurs and delay some of the data packages. These delayed data packages are send at a later point in the time when the demand of the network is not that high.

Some of the data packages are more important than other packages. Therefor the whole system comprising the mobile station 1, base station 3 and the network 6 contain information about how the data packages sent from or sent to a certain data station 11, 12, 13 should be handled. The GPRS-Network stores therefore information called QoS (quality of service) that contains information how data packages from or to a specific address should be handled. These information is stored in a QoS profile containing data related to the precedence, reliability, delay and the user data throughput.

For the parameter precedence there are three different priority classes (high, normal, low) and the data packages with high precedence will be transported ahead of other precedence levels, the data packages with normal precedence will be transported ahead of the data packages with low priority and the data packages with low precedence will only be transported if there are no high or normal priority data packages pending.

Related to the reliability there are also three different reliability classes and within each reliability class there are probabilities assigned that a data package gets lost, duplicated, the sequence of the data packages is disturbed, or that the content of the data packages are delivered with an undetected error.

The parameter delay is related to the transport from a sender to a receiver.

The parameter throughput has two sub parameters wherein this sub parameters the maximum possible data rate and a mean data rate are defined.

According to the invention the mobile station 1 comprises a data processing units 2 that is capable to request a certain QoS profile from the base station 3 and the network 6. The processing unit 2 is adapted to analyse the data that origin from the data stations 11, 12, 13 or that are sent to the data stations 11, 12, 13. Based on this analysis the processing unit 2 requests an appropriate quality of service profile from the base station 3 and the network 6.

For the further description it will be assumed that the data station 11 is a computer that is used as an internet access, data station 12 is an e-mail system and data station 13 is a video data systems that is capable to send video data or receive video data. As an example the data station 11 is located outside the mobile station 1 whereas the data stations 12 and 13 are incorporated in the mobile station 1. It is also possible that all these components are integrated in the mobile station 1 or that they are located outside the mobile station and that the mobile station is simply used as an interface.

The analysis of the data performed by the processing unit 2 is specially simple if the data itself contain information how the data should be processed. This is the case for the internet header as specified in RFC 791 . This internet header contains information related to the precedence, the delay, the throughput and the reliability of the data. In this case the analysis of the processing unit 2 is simply a translation of the internet header to the appropriate quality of service classes used by the GPRS.

Another possibility for an analyses is to analyse what kind of data the station is sending. If the processing unit 2 detects that the data are sent from or to the e-mail system 12 it will request a quality of service profile having very high reliability, a high delay and a low data rate. If the processing unit 2 detects that the data are sent from or to the video data system 13 it will request a quality of service profile involving a low reliability, a low delay and a very high data rate.

Another possibility is to analyse the traffic of packages. If the number of packages that are pending to sent over the air interface 100 is higher than the number of packages that are sent over the air interface 100 the processing unit 2 should request to increase the data rate. If the processing unit detects that many data packages contain errors than it should request that the reliability class should be increased.

Figure 2 shows an example of how the processing unit 2 is processing and analysing the data. On the left side of the function block 2 is a stream of data 200, as an example here a continuous stream of 200 which has in the beginning a header 201 that contains control information. Control information is any information, that is needed for the processing of the data stream 200. The header 201 contains information about the type of data for example video data or e-mail data. Further the header 201 contains information about the handling of the data 200. This may contain information about the importance of the data, priority, how fast the data should be delivered and so on. An example is the internet header as described above. The function of the processing unit 2 is then to chop the information stream 200 in little packages 202 that are than sent over the air interface if needed, also called segmentation. The function of the processing unit 2 is also to receive data packages 202 and to reconstruct the stream of data 200. The communication system is comprising of the mobile station 2, base station 3 and telephone network 6 contains control information of how the data packages 202 should be handled. It is a function of the processing unit 2 and analyse the data, that means either the data 200 or the data packages 202, and to request from the base station 3 or the communication system 6 the quality of service profile with which the data packages 202 are treated. The analyses could be simply a translation of the information that is contained in the control field 201, that means the control information related to priority, delay, throughput and reliability in the header 201 are simply transformed into a format that is used for the data packages 202. Another way of analyses is to analyse what type of data are used for the data stream 200. This information is also contained in the header 201. The processing unit 2 uses this information to request then a quality of service profile that is appropriate for this specific kind of data. A further possibility for analysis is to look at a stream of data packages 202. If to many data packages 202 contain errors then the reliability of the transmission should be enhanced. If the processing unit 2 receives more data 200 then it can send away via data packages 202 the processing unit 2 should request, that the throughput should be enhanced.

## Claims

1. Mobile station (1) capable to exchange data via an air interface (100) between different data stations (11, 12, 13) and a fixed network (3, 6), said data being arranged in data packages, the mobile station (1) comprising a processing unit (2), arranged to process said data, **characterized in that**, said processing unit (2) is arranged to analyze a data package exchanged over the air interface (100) and is arranged to request based on the analysis of the data package from the fixed network (3, 6) quality parameters for the handling of the data package.

2. Mobile station according to claim 1, **characterised in, that** the processing unit (2) is arranged to analyse a data package by reading a control field contained in said data package, said control field comprising information of how the data package should be handled.

3. Mobile station according to claim 2 **characterised in that** the control field comprises information related to the precedence, the delay, the throughput and the reliability of data in the data package.

4. Mobile station according to claim 1, **characterised in, that** the processing unit (2) is arranged to analyse a data package by extracting an information about what type of data are arranged in the data package.

5. Mobile station according to claim 1, **characterised in, that** the processing unit (2) is arranged to analyse the data packages by analysing a stream of data packages.

6. Communication system comprising a mobile station of one of claims 1 to 4 and a fixed network (3, 6) said mobile station (1) capable to exchange data via an air interface (100) between different data stations (11, 12, 13) and the fixed network (3, 6), said data being arranged in data packages, the mobile processing unit (2), processing said data **characterised in that**, said processing unit (2) is arranged to analyse a data package exchanged over the air interface (100) an is arranged to request based on the analysis from the fixed network (3,6) quality parameters for the handling of the data package.

7. Communication system according to claim 6 **characterised in that** the quality parameters are stored in profile containing information of how a data package should be handled.

8. Communication system according to claim 7 **characterised in that** the information is related to the precedence, the delay, the throughput and the reliability of data in the data package.

9. Communication system according to one of claims 6 to 8 in form of a GSM, in particular a GPRS-system.

## Patentansprüche

1. Mobilstation (1), die Daten über eine Luftschnittstelle (100) zwischen verschiedenen Datenstationen (11, 12, 13) und einem Festnetz (3, 6) austauschen kann, wobei die Daten in Datenpaketen angeordnet sind, wobei die Mobilstation (1) eine Verarbeitungseinheit (2) umfasst, die ausgelegt ist zum Verarbeiten der Daten, **dadurch gekennzeichnet, dass** die Verarbeitungseinheit (2) ausgelegt ist zum Analysieren eines über die Luftschnittstelle (100) ausgetauschten Datenpakets und ausgelegt ist zum Anfordern, auf der Basis der Analyse des Datenpakets von dem Festnetz (3, 6), von Güteparametern für die Handhabung des Datenpakets.

2. Mobilstation nach Anspruch 1, **dadurch gekennzeichnet, dass** die Verarbeitungseinheit (2) ausgelegt ist zum Analysieren eines Datenpakets durch Lesen eines in dem Datenpaket enthaltenen Steuerfelds, wobei das Steuerfeld Informationen darüber umfasst, wie das Datenpaket gehandhabt werden sollte.

3. Mobilstation nach Anspruch 2, **dadurch gekennzeichnet, dass** das Steuerfeld Informationen bezüglich der Priorität, der Laufzeit, des Durchsatzes und der Zuverlässigkeit von Daten in dem Datenpaket umfasst.

4. Mobilstation nach Anspruch 1, **dadurch gekennzeichnet, dass** die Verarbeitungseinheit (2) ausgelegt ist zum Analysieren eines Datenpakets durch Extrahieren einer Information darüber, welche Art von Daten in dem Datenpaket angeordnet ist.

5. Mobilstation nach Anspruch 1, **dadurch gekennzeichnet, dass** die Verarbeitungseinheit (2) ausgelegt ist zum Analysieren der Datenpakete durch Analysieren eines Stroms von Datenpaketen.

6. Kommunikationssystem, das eine Mobilstation nach einem der Ansprüche 1 bis 4 und ein Festnetz (3, 6) umfasst, wobei die Mobilstation (1) die Daten über eine Luftschnittstelle (100) zwischen verschiedenen Datenstationen (11, 12, 13) und einem Festnetz (3, 6) austauschen kann, wobei die Daten in Datenpaketen angeordnet sind, wobei die Mobilverarbeitungseinheit (2) die Daten verarbeitet, **dadurch gekennzeichnet, dass** die Verarbeitungseinheit (2) ausgelegt ist zum Analysieren eines über die Luftschnittstelle (100) ausgetauschten Datenpakets und ausgelegt ist zum Anfordern, auf der Basis der Analyse des Datenpakets von dem Festnetz (3, 6), von Güteparametern für die Handhabung des Datenpakets.

7. Kommunikationssystem nach Anspruch 6, **dadurch gekennzeichnet, dass** die Güteparameter in profilenthaltenen Informationen darüber gespeichert sind, wie ein Datenpaket gehandhabt werden sollte.

8. Kommunikationssystem nach Anspruch 7, **dadurch gekennzeichnet, dass** die Informationen die Priorität, die Laufzeit, den Durchsatz und die Zuverlässigkeit von Daten in dem Datenpaket betreffen.

9. Kommunikationssystem nach einem der Ansprüche 6 bis 8 in Form eines GSM-, insbesondere eines GPRS-Systems.

## Revendications

1. Station (1) mobile apte à échanger des données par une interface (100) hertzienne entre des stations (11, 12, 13) de données différentes et un réseau (3, 6) fixe, les données étant mises en paquets de données, la station (1) mobile comprenant une unité de traitement agencée pour traiter les données, **caractérisée en ce que** l'unité (2) de traitement est agencée pour analyser un paquet de données échangé par l'interface (11) hertzienne et est agencée pour demander, sur la base de l'analyse du paquet de données, au réseau (3, 6) fixe des paramètres de qualité pour la manipulation du paquet de données.

2. Station mobile suivant la revendication 1, **caractérisée en ce que** l'unité (2) de traitement est agencée pour analyser un paquet de données en lisant une zone de commande contenue dans le paquet de données, la zone de commande comprenant des informations sur la façon dont le paquet de données doit être manipulé.

3. Station mobile suivant la revendication 2, **caractérisée en ce que** la zone de commande comprend de l'information se rapportant à la priorité, au retard, au débit et à la fiabilité de données du paquet de données.

4. Station mobile suivant la revendication 1, **caractérisée en ce que** l'unité de traitement est agencée pour analyser un paquet de données, en extrayant une information sur le type de données qui sont mises dans le paquet de données.

5. Station mobile suivant la revendication 1, **caractérisée en ce que** l'unité (2) de traitement est agencée pour analyser les paquets de données, en analysant un train de paquets de données.

6. Système de communication comprenant une station mobile suivant l'une des revendications 1 à 4 et un réseau (3, 6) fixe, la station (1) mobile étant apte à échanger des données par une interface (100) hertzienne entre des stations (11, 12, 13) de données différentes et le réseau (3, 6) fixe, les données étant mises en paquets de données, l'unité (2) de traitement mobile traitant les données, **caractérisée en ce que** l'unité (2) de traitement est agencée pour analyser un paquet de données échangées par l'interface (100) hertzienne et est agencée pour demander, sur la base de l'analyse, au réseau (3, 6) fixe des paramètres de qualité pour la manipulation du paquet de données.

7. Système de communication suivant la revendication 6, **caractérisé en ce que** les paramètres de qualité sont mémorisés dans de l'information contenant des profils sur la façon dont un paquet de données doit être manipulé.

8. Système de communication suivant la revendication 7, **caractérisé en ce que** l'information se rapporte à la priorité, au retard, au débit et à la fiabilité de données du paquet de données.

9. Système de communication suivant l'une des revendications 6 à 8 sous la forme d'un GSM, en particulier sous la forme d'un système GPRS.
